# EUROPEAN PATENT APPLICATION

(11) **EP 2 181 805 A2**
(43) Date of publication of application: **05.05.2010**
(21) Application number: 09013321.6
(22) Date of filing: 21.10.2009
(51) Int. Cl.: B24B 49/16, B24B 53/12

(54) **Device and method for determining the coefficient of friction of conditioner discs**

(30) Priority: 31.10.2008 US 262974
(71) Applicant: Mitsubishi Materials Corporation, Chiyoda-ku Tokyo (JP); Araca Incorporated, Tucson AZ 85750 (US)
(72) Inventor: Borucki, Leonard, Tucson AZ 85718 (US); Rikita, Naoki, Tokyo (JP); Philipossian, Ara, Tucson AZ 85718 (US); Sudargho, Fransisca, Maria, Astrid, Tucson AZ 85718 (US); Zhuang, Yun, Tucson AZ 85718 (US)
(74) Representative: HOFFMANN EITLE

(57) **Abstract**

This device for determining the coefficient of friction of conditioner discs, comprises a base member (36), a disc friction member (39) provided on the base member (36), the base member (36) and the disc friction member (39) having lengths sufficient to allow transverse motion of the conditioner disc (52) for measurement of the coefficient of friction, a moving means (48) for moving the conditioner disc (52) along the disc friction member (39), a securing means (50) for securing the conditioner disc (52) to the moving means (48) for moving the conditioner disc (52) along the disc friction member (39), a driving means (41) for driving the moving means (48) for moving the conditioner disc (52) along the disc friction member (39), and a measuring means (28) for measuring the frictional force applied to the disc friction member (39) by the movement of the conditioner disc (52).

## Description

### Field of the Invention

The present invention relates to device and method for measuring the coefficient of friction of conditioner discs.

### Background of the Invention

Conditioner discs have been used in chemical mechanical polishing (CMP) processes to maintain the roughness of polyurethane polishing pads. These discs have been produced and marketed by several vendors to standards of reliable quality and effectiveness. Generally, conditioner discs are evaluated based on, among other things, the total number of abrasive grains (for example, diamond grains) present on the surface of the disc and the number of abrasive grains remaining after certain specified periods of use or environmental testing. This number will in turn relates to the effectiveness of the conditioner disc in wearing away the surface of the polyurethane CMP pad during CMP processes. Another way of determining this effectiveness is to consider the coefficient of friction of the conditioner disc. Such a method takes into account not only the effect of the number of active abrasive grains but their positioning, size, roughness and any other factors involved in the wear of the polyurethane pad by the conditioner disc.

The present applicants filed a Japanese Patent Application (JP-A-2008-80480 published on April 10, 2009) claiming a method for measuring the number of active abrasive grains of conditioner discs. However, to date no method for consistently determining the coefficient of friction of conditioner discs has been disclosed.

Heretofor, those skilled in the art who desired to know the coefficient of friction of a conditioner disc, were able to determine it by methods available to the prior art under certain conditions. In 2003, Mark Bubnick, Ph.D. and Sohail Qamar Abrasive Technology, in a paper published in "Arbasive Technology TECHVIEW" (http://www.abrasive-tech.com/pdf/tcmptungsten.pdf) disclosed a method of measuring the coefficient of friction of conditioner discs using "Abrasive Technology's cut-rate tester" (trade name) using "Rodel ICI1000 pads" (trade name) in deionised water. However, this procedure, involved complex setup, expensive materials and it does not appear that it is possible to determine the coefficient of the disc at a single moment in time or for a single orientation.

Users of conditioner discs need to know that they are receiving the same quality of product from conditioner disc manufacturers from the standpoint of process effectiveness on a consistent basis and such a test would allow users to better determine specifications for what they require. Users may also want to know how well their disc are faring under certain operating conditions and an accurate method of determining the coefficient of friction of conditioner discs will provide them with useful information in that regard. Finally, from a research and development standpoint, the results of such a test would provide makers of conditioner discs with more useful information about how to improve existing manufacturing processes for conditioner discs or in the development of new CMP and related processes.

The present invention seeks to provide an accurate and consistent method for determining the coefficient of friction of conditioner discs. These and other advantages of the invention will be apparent from the description of the invention provided herein.

### SUMMARY OF THE INVENTION

A device according to the present invention comprises a base member, a disc friction member provided on the base member, the base member and the disc friction member having lengths sufficient to allow transverse motion of the conditioner disc for measurement of the coefficient of friction, a moving means for moving the conditioner disc along a disc friction surface of the disc friction member, a securing means for securing the conditioner disc to the moving means for moving the conditioner disc along the disc friction member, a driving means for driving the moving means which moves the conditioner disc along disc friction surface of the disc friction member, and a measuring means for measuring the frictional force applied to the disc friction member by the movement of the conditioner disc. The device of the present invention may comprise a velocity measuring means for measuring the velocity of the conditioning disc.

A method of the present invention for determining the coefficient of friction of conditioner discs using the abovementioned device, comprises the steps of moving the conditioner disc placed an abrasive layer down on the disc friction member along the disc friction member, and measuring the frictional force applied to the disc friction member by the movement of the conditioner disc by the measuring means. The method of the present invention may comprises a step of measuring the velocity of the conditioning disc by a velocity measuring means.

### BRIEF DESCRIPTION OF THE DRAWINGS

FIG. 1 is a front view of a device for the measurement of the coefficient of friction of conditioner discs according to an embodiment of the present invention.
FIG. 2 is a plan view of the device for the measurement of the coefficient of friction of conditioner discs.
FIG. 3 is a side view of the device for the measurement of the coefficient of friction of conditioner discs.

### DETAILED DESCRIPTION OF THE INVENTION

In the present specification, "forward direction" is a direction to which a conditioner disc moves during the measurement of the coefficient of friction of conditioner disc, and "backward direction" is the reverse direction. A general conditioner disc has a disc body and an abrasive grain layer provided on the lower surface of the disc body, and abrasive grains, such as diamond grains or CBN grains, of a large number are dispersed in the surface of the abrasive grain layer. The conditioner disc grinds a surface of a CMP pad formed by polyurethane and so on by the abrasive grains, and makes the surface rough to improve the efficiency of the CMP process using the CMP pad.

The inventors of the present invention, in order to solve the problem of easily and cost effectively measuring the coefficient of conditioner discs either in an unused state or after a period of use have as a result of systematic and prolonged study of the problem of reliably providing a method that would obtain convenient and consistent results for the coefficient of friction of chemical mechanical polishing use conditioner discs have developed the present invention.

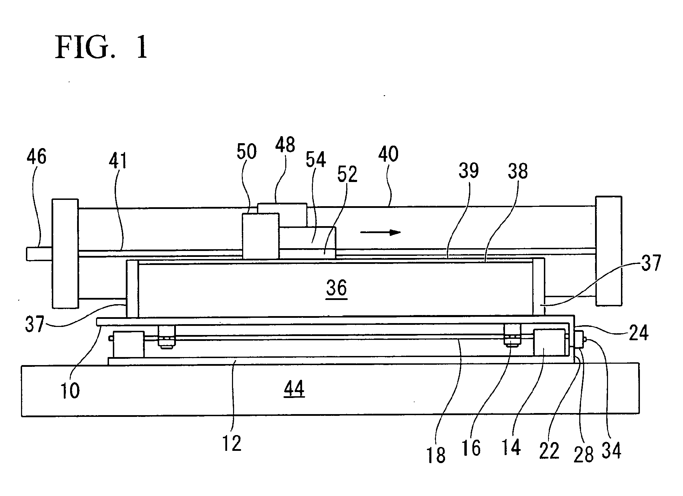

FIGS. 1 to 3 shows an embodiment of the present invention. This device includes a horizontally-arranged rigid base member (slab) 36 having a rectangular parallelepiped shape of a constant thickness, and a disc friction member 39 having a sheet shape fixed on the upper surface of the base member 36. The base member 36 and the disc friction member 39 have a predetermined length in a horizontal direction so as to allow transverse movement of a conditioner disc 52 for measurement of the coefficient of friction. The device further comprises a moving means 48 for moving the conditioner disc 52 along a disc friction surface (upper surface) of the disc friction member 39, a securing means 50 for securing the conditioner disc 52 to the moving means 48 for moving the conditioner disc 52 along the disc friction member 39, a driving means 41 for driving the moving means 48 which moves the conditioner disc 52 along disc friction surface of the disc friction member 39, and a measuring means 28 for measuring the frictional force applied to the disc friction member 39 by the movement of the conditioner disc 52. This device may further include a velocity measuring means for measuring the velocity of the conditioner disc 52.

The method for measuring the coefficient of friction of conditioner discs according to the embodiment is a method using the above-mentioned device, and comprises the steps of moving the conditioner disc 52 placed an abrasive layer down on the disc friction member 39 along the disc friction member 39 by the moving means 48, and measuring the frictional force applied to the disc friction member 39 by the movement of the conditioner disc 52 by means of the measuring means 28. According to the method, it is possible to measure the coefficient of friction of the conditioner disc for CMP polishing, while moving the conditioner disc at various velocities, and while applying various vertical loads on the conditioner disc. It is also possible to measure the velocity of the conditioner disc concurrently with the coefficient of friction and to use the velocity data for analyzing the property of the conditioner disc.

According to the device and the method of this embodiment, the coefficient of friction of the conditioner disc used for roughening up the surface of CMP pads can be efficiently measured. Conditioner discs are covered with large numbers of very small abrasive grains and in addition to any inherent frictional characteristic of the matrix in which the abrasive grains are set possess a component of the coefficient of friction resulting from the action of the individual abrasive grains scratching through the CMP pad. Since the coefficient of friction is actually not the component of one material in one surface but the composite system of two possibly distinct surfaces interacting with each other, it is important for purposes of determining the coefficient of friction of the conditioner disc that the other material be similar in hardness to the polyurethane material used in the discs of CMP processing. In this point of view, the disc friction member 39 is preferably formed by:
(i) at least one thermoplastic resin selected from the group consisting of polycarbonate, polyethylene, polypropylene, polystyrene, AS resin, ABS resin, poly(vinyl chloride), poly(methyl methacrylate), polyamide, fluorocarbon polymers (fluororesin), polyacetal resin, poly(phenylene oxide), polyethlene terephthalate (PET), polysulfone, poly(phenylene sulfide), cellulose acetate, acrylic resin, and/or
(ii) at least one thermosetting resin selected from the group consisting of polyurethane, phenol resin, polyester resin, epoxy resin, silicone resin, polyimide resin.

In the case where a plurality of resins are used, the resins may be mixed or laminated to form the disc friction member 39 (sheet). More preferable materials for forming the disc friction member 39 are polycarbonate, polyurethane, polyethlene terephthalate (PET), and acrylic resin. Among these resins, polycarbonate and polyurethane are more preferable. Especially, polycarbonate sheets of a very high degree of smoothness are preferable because they are easy to obtain at low cost. However, the scope of the present invention is not limited to the above materials.

The true coefficient of friction involves the microscopic properties of the two surfaces of the system, the surface of the conditioner disc and the surface it is in contact with. However, for the purposes for which this property is being measured in the conditioner discs, the effect of the abrasive grains, particularly those situated in such a way as to be able to scratch the surface facing the disc are of paramount importance. Since the same sheet, whether polycarbonate or polyurethane or other suitable material must be consistently used, the only changes reflected in changes in the coefficient of friction data obtained can be attributed to the difference in number, placement or quality of the abrasive grains set in the disc at the outset and less directly the wearing down of the abrasive grains on the disc as it is used. Notably there are subtle variations in the coefficient of a single disc itself as it is rotated with respect to the direction of transverse motion used during measurement.

The formula for coefficient of friction is equal to the frictional force divided by the load applied vertically on the surfaces. Velocity and temperature exert an influence on coefficient of friction and should be fixed constant to result in coefficient of friction data that are comparable between different discs or the same discs at different times. Surface area should not be a factor for discs with the same surface area but would be a factor for different sized discs. The fundamental function of this device and method provide a value for frictional force which is composed largely of the force of abrasive grains scratching into the polycarbonate or polyurethane surface and resisting forward motion of the disc. Ultimately since the load on the disc is known and other factors such as surface area, disc velocity and temperature are or can be maintained constant, a consistent reproducible figure for the coefficient of friction of a disc that can be compared with the corresponding figure for other discs or the same disc that has undergone further wear can be obtained.

Manufacturers and users of conditioner discs need to know how rough the conditioner discs are and by extension how capable of roughening the CMP pads they are. They also need to know how much variation there is between discs and it is even desirable to know if single discs are consistent in their roughening properties in which ever direction they are moved across the pad (Though rotation would minimize the overall effect of a difference in this characteristic, it is nonetheless a characteristic of the conditioner disc). It is further desirable to know how quickly the effectiveness of the conditioner disc is altered by use, generally or under particular conditions.

The present invention overcomes the limitations of the prior art by providing a quick and easy method to measure a large number of conditioner discs or the same disc or discs many times in a short time and to determine the coefficient of friction of the disc, a characteristic that bears directly upon its ability to wear and roughen CMP pads, with a simple calculation dividing the normal or "down" force by the frictional or in this case the "shear" force. The design of the present invention makes the control of various factors such as temperature, velocity of the conditioner disc, flatness and material consistency of the surface contacting the diamond disc, load and the like very easy. The device is essentially a flat very stable surface over which is lain a sheet of material having hardness properties the same or near to those of the polyurethane used in CMP pads, a device for moving the pad across this sheet and some way of measuring the force imparted to the sheet and surface as the conditioner disc passes. In this way, the normal or down force is known by calculation from the mass of the conditioner disc plus any added load, the frictional force is obtained and the two are divided to yield the coefficient of friction of the conditioner disc.

All dimensions for parts in the present embodiment follow are based on a conditioner disc size of 3 inches (7.6 cm) in diameter and may be altered as needed in proportion to changes in the size of the sample used. The specific dimensions given herein are in no way limiting but are by way of example to demonstrate an effective embodiment of the invention.

As the solid base member 36 of the present embodiment naturally any solid slab capable or remaining stable and undistorted, that is easily polished to a precise flat finish that is not easily marred, does not alter shape significantly with change in temperature, and neither generates or transmits vibration excessively during operation may be used. A hard massive stone, ceramic, metallic or plastic composite material is preferred, a polished stone block is more preferred. As the stone of the polished stone block, the type of stone is not particularly limited and any stone with high density and structural integrity that can hold a hard polished surface may be used but granite, gabbro, pegmatite, diorite, basalt, and the like are preferred and granite is more preferred. As the dimensions of the solid base member 36, any lateral dimensions wide enough to securely encompass the conditioner disc may be used and it is preferred that the lateral dimension be at least 10.2 cm (4 inches). The length of the solid base member 36 is not particularly limited, however, it should be great enough to allow sufficient transverse movement of the conditioner disc to obtain a reading of the frictional force by the frictional force measuring means. A length of at least 45.7 cm (18 inches) is preferred. The thickness of the solid base member 36 is not particularly limited and a minimum thickness of about 12.7 mm (about half an inch) is preferred. However, if all of the dimensions of the solid base member are too large, the mass may be so great as to impede the operation of the device in applying frictional force to the measuring means 28 for measuring the frictional force. Therefore, in principle, the dimensions and resulting mass of the solid base member 36 should be no larger than is necessary to provide a stable smooth surface for operation and to allow the length of conditioner disc 52 motion desired by the user.

As the disc friction member 39 on top of the solid base member 36, any hard material with an extremely smooth flat surface that may be scratched by the abrasive grains in a conditioner disc 52 may be used. A hard material having the same hardness index as the material (for example, polyurethane) of CMP pads is preferred. Polycarbonate sheet which may be easily purchased from the home hardware market in essentially very flat smooth form is more preferred. The disc friction member 39 is detachably attached on the upper surface of the base member 36 without a gap therebetween by suitable fastener means. Although the fastener means are not limited, various types of mechanical clamps for detachably securing at least four corners of the disc friction member 39 to the base member 36 are preferable.

As the moving means 48 for moving the conditioner disc 52 along the disc friction member 39, any means capable of moving the disc 52 along the surface is permitted and a transverse driven by a motor with a screw, chain, hydraulic or other fluid, or electromagnetic mechanism may be used. A screw feeder comprising a horizontal screw 41 to be rotated and a block 48 having threads engaging with threads of the screw 41 is preferable because such a screw feeder easily produce a high torque at a low moving velocity. A securing means 50 is attached on the block 48 for holding the conditioner disc 52.

The screw 41 may be rotated by a motor. A load meter (load cell) may be provided between the base member 36 and a base for measuring the frictional force applied by the conditioner disc 52 to the disc friction member 39.

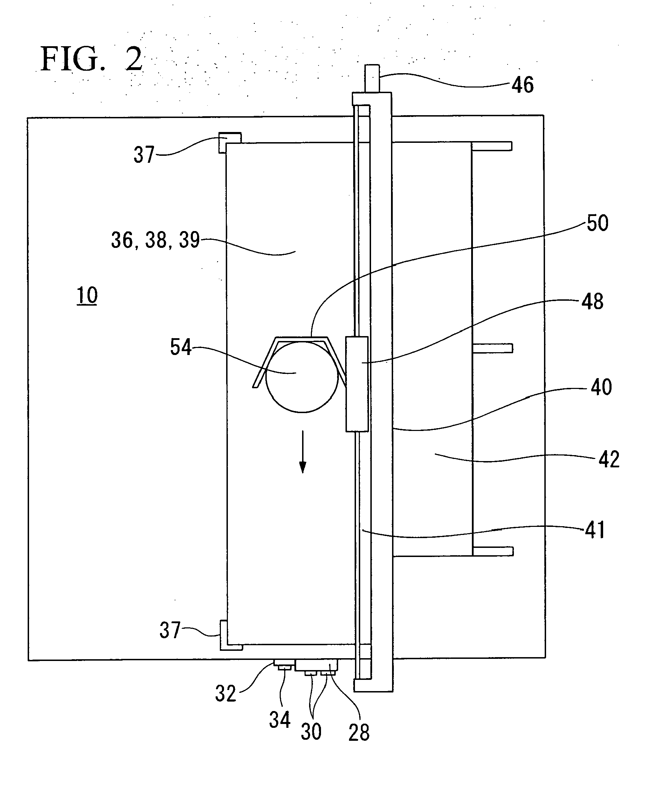

As the securing means 50 for securing the conditioner disc 52 to the moving means 48, any suitable means may be used. When the moving means 41 moves forward as shown in FIG. 2, the securing means 50 rigidly holds the conditioner disc 52, and pushes it forward to follow the moving means 48 while preventing the rotation of the conditioner disc 52. For example, the securing means 50 may be a holder 50 having a concave portion facing forward, which has a concave shape when seen from above so as to hold at least a part of the periphery of the conditioner disc 52 placed an abrasive layer down on the disc friction member 39. At least one weight 54 is placed on the conditioner disc 52 for applying a load to the conditioner disc 52 toward the disc friction member 39. It is preferable to prepare a plurality of weights 54 having various weights in order to change the load to be applied to the conditioner disc 52. The weight 54 may have a disc shape having a constant thickness and the same diameter as that of the conditioner disc 52.

The securing means 50 is a concave structure made of plastic, ceramic, metal or other hard material, and the concave surface of the concave portion is preferably perpendicular to the upper surface of the disc friction member 39. When the concave surface is perpendicular, the securing means 50 can push the conditioner disc 52 toward a horizontal direction without generating a vertical force. The dimensions of the securing means 50 may be any dimensions suitable to holding the conditioner disc 52. For example, the opening width of the concave portion may be 7.6 cm (3 inches) when the diameter of the conditioner disc 52 is 3 inches. As the height of the securing means 50, any suitable dimension that will allow certain loads to be added to the conditioner disc 52 and the weight 54 may be used. When the diameter of the conditioner disc 52 is 3 inches, the height of the securing means 50 may be about 38.1 mm (1.5 inches).

As the driving means 41 for driving the moving means 48, any suitable means may be used. In this embodiment, the driving means 41 comprises a stepping motor (not shown), a cable attachment 46 for connecting the shaft of the stepping motor and an end of the screw 41, and a controller for controlling the rotating speed of the stepping motor in a predetermined range.

In the present embodiment, a measuring means for measuring the velocity of the movement of the conditioner disc 52 is provided. As the velocity measuring means, any means including sensors and timers that record how long the conditioner disc 52 required to move between set points may be used. A software program that calculates the velocity of the disc based on the rapidity of motor or screw rotation is also preferred.

As the measuring means 28 for measuring the frictional force imparted by the moving conditioner disc 52, any reasonable means may be applied. As shown in FIGS 1 to 3, the present embodiment comprises an upper plate 10 supporting the base member 36, a lower plate 12 fixed on the base 44, two runners 18 (rails, wheels or guides) provided on the lower plate 12 for supporting the upper plate 10 in a smoothly movable manner in the longitudinal direction of the base member 36, and a load sensor (load cell) 28 provided between the upper and lower plates 10 and 12 for measuring the load produced between the plates 10 and 12 in the longitudinal direction of the base member 36. By this structure, the load sensor 28 can measure the frictional force applied to the disc friction surface of the disc friction member 39 by the movement of the conditioner disc 52. It is not limited in the present invention, the upper plate 10 and the lower plate 12 are preferably lighter than 45.36 kg (100 pounds), and they are preferably formed by a rigid and durable material which does not easily deform, for example, steel plates and so on.

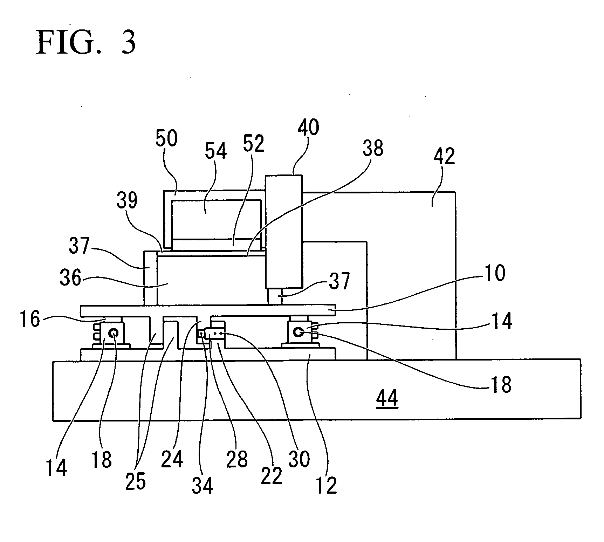

Any means of attaching the load sensor 28 between the two plates 10 and 12 may be used. In this embodiment, there are provided a downward protrusion 24 from the upper plate 10 at right angle to the surface of the plate 10 to which the load sensor 28 is bolted by a bolt 30, and a protrusion 22 from the lower plate 12 to which contacts the sensory portion 32 of the load cell 28. Two bar-shaped smooth runners 18 are arranged so as to extend in the longitudinal direction of the base member 36 above the lower plate 12 via pillow blocks 14 fixed on the lower plate 12. A pair of runner holders 16 are attached on each of the runners 18 so as to smoothly travel along the runner 18, and these four runner holders 16 are fixed on the bottom surface of the upper plate 10. By this arrangement, the upper plate 10 can move along the runners 18 with a very small resisting force. The length of move of the upper plate 10 with respect to the lower plate 12 is determined so that the load sensor 28 can measure the frictional force. As shown in FIG. 3, guide blocks 25 may be attached to the opposed surfaces of the upper plate 10 and the lower plate 12 respectively so as to extend in the front-back direction. Smooth side faces of the guide blocks 25 engage with each other in a slidable manner to prevent the displacement of the plates 10 and 12 in the left-right direction. The contacting surfaces of the runner holders 16 and the runners 18 are preferably treated or coated with anti-friction materials. It is also possible to provide the runners 18 to slide with respect to the pillow blocks 14.

The load sensor 28 may be attached by any suitable means, but attachment to the upper protrusion 24 by means of two bolts 30 (for example, diameter of the bolt 30 is 12.7 mm (half inch)) is preferred.

As to the method of operation of the present invention, any suitable operation method may be used but after measuring the temperature and humidity of the surroundings, placing a conditioner disc 52 in the securing means 50 for securing the conditioner disc face down, and adding a known load 54 between 0 and 4.983 kg (11 pounds) additional to the mass of the conditioner disc 52, and then moving the conditioner disc 52 down the length of the disc friction member 39 at predetermined velocity and recording the frictional force is preferred. The coefficient of friction is calculated by dividing the load (including the weight of the conditioner disc 52) by the load detected on the load sensor 28. The disc 52 is rotated by 90 degrees and the test is run again until four orientations are taken. The data may be averaged or may be individually used for evaluating the directional character of the abrasive layer of the conditioner disc 52. More or fewer orientations may be taken as the operator desires (rotational angles of 30, 45, 60, or 120 degrees can also be preferable).

The disc friction member 39 should be replaced between each run. Repeated tests can be made of the same disc at different points in its use life or tests may be made on a large number of discs of the same type from the same manufacturer. Sensory data for velocity and frictional force may be output in graphical form and software may be used to calculate the coefficient of friction from the data of a run. Data may be transmitted from the sensor 28 by cable or wireless antennae or any suitable means.

### EXAMPLES

### [Example 1]

A measuring apparatus shown in FIGS. 1 to 3 and having the follow structure was manufactured. Two steel sheets of 6.35 mm (1/4 inch) thick having dimensions of 45.7 cm (18 inches) by 76.2 cm (30 inches) were made into an upper plate 10 and a lower plate 12, the lower plate 12 was bolted to a solid table surface 44 and four pillow blocks 14 were bolted to the upper face of the lower plate 10. Four runner holders 16 were attached along the same lines to the bottom of the upper plate 10, and two runners 18 were introduced through them. The runner holders 16 were arranged between the pillow blocks 14 so that they could slide freely at least a short distance in the length direction of the runners 18. A upward protruding attachment 22 was attached to the forward edge of the lower plate 12 and an downward protruding attachment 24 was attached to the forward edge of the upper plate 10 so that the vertical edges almost contact. The load cell 28 was attached to the downward protruding attachment 22 by two half inch bolts 30 and the sensory portion 32 of the load cell 28 was placed so that it contacts the upward protruding attachment 22. A half inch bolt 34 was provided to secure the load cell 28 there so that movement would not damage the load cell 28 when the device was not in use.

A block of polished granite 36 with a polished, smooth, level and horizontal upper surface 38 and dimensions of 60.96 cm (2 feet) by 15.2 cm (6 inches) by 5.08 cm (2 inches) was affixed by seating guides 37 to the upper surface of the upper plate 10. On top of the granite block surface 38 was laid a polycarbonate sheet 39 of 2.36 mm (0.093 inch) thick and having the same lateral dimensions as the granite block 38. Several of these sheets were prepared in advance of the test. The sheet 39 was affixed using clamps (not shown). A transverse 40 was attached to the solid table surface 44 by means of a support structure 42 bolted to the surface 44 holding the lower plate 12 by bolts (not shown) in the form described in FIG. 3. To the end of the transverse 40 a cable attachment 46 was attached and the transverse 40 linked by cable to a stepper motor (not shown). The screw 41 of the transverse 40 passes through a threaded block 48 that was supported by and slides along the transverse 40. A block 48 in turn was attached to the side of and supports a holder 50 that secures the conditioner disc 52. On the conditioner disc 52 was lain weights 54 so that the total weight of conditioner disc and weights was 2.77 kg (6.1 pounds). The precise rotational position of the conditioner disc 52 with respect to the concave surface 50 was observed and noted.

When the weights 54 have been placed, the stepper motor was set so that the block 48 on the transverse 40 moves at a velocity of 0.246 meters per minute and the conditioner disc 52 was moved in the length direction of the transverse 40. The load from the load cell 28 representing frictional force from the movement of the conditioner disc 52 was recorded and output in graphical form. The average coefficient of friction over the run and standard deviation were calculated from this data.

### [Examples 2 to 64]

Everything was carried out exactly as in Example 1 except that the orientation of the conditioner disc with regard to the direction of motion was rotated forty five (45) degrees.

Examples 3-64 represent changes in disc, forty five degree changes in orientation, and load as indicated. The results for examples 1-64 are shown in Tables 1 through 16 below:

**Table 1**

| (Disc No.: 979926-05-1) | | | | | | | |
|---|---|---|---|---|---|---|---|
| Run | Orientation | Down Force (lbf) | Velocity (m/min) | Frictional force(lbf) | | COF | |
| | | | | Average | SD | Average | SD |
| 1 | 1 | 6.1 | 0.246 | 4.02 | 0.12 | 0.659 | 0.019 |
| 2 | 1 | 6.1 | 0.246 | 3.86 | 0.12 | 0.632 | 0.019 |
| 3 | 2 | 6.1 | 0.246 | 3.91 | 0.11 | 0.642 | 0.018 |
| 4 | 2 | 6.1 | 0.246 | 3.76 | 0.12 | 0.616 | 0.020 |
| 5 | 3 | 6.1 | 0.246 | 3.99 | 0.10 | 0.653 | 0.017 |
| 6 | 3 | 6.1 | 0.246 | 3.87 | 0.12 | 0.634 | 0.019 |
| 7 | 4 | 6.1 | 0.246 | 3.94 | 0.13 | 0.646 | 0.021 |
| 8 | 4 | 6.1 | 0.246 | 3.89 | 0.11 | 0.638 | 0.019 |
| 9 | 5 | 6.1 | 0.246 | 3.85 | 0.15 | 0.631 | 0.025 |
| 10 | 5 | 6.1 | 0.246 | 3.86 | 0.13 | 0.633 | 0.022 |
| 11 | 6 | 6.1 | 0.246 | 3.96 | 0.19 | 0.649 | 0.031 |
| 12 | 6 | 6.1 | 0.246 | 3.90 | 0.21 | 0.640 | 0.034 |
| 13 | 7 | 6.1 | 0.246 | 4.04 | 0.17 | 0.663 | 0.027 |
| 14 | 7 | 6.1 | 0.246 | 4.06 | 0.15 | 0.665 | 0.024 |
| 15 | 8 | 6.1 | 0.246 | 3.90 | 0.22 | 0.640 | 0.036 |
| 16 | 8 | 6.1 | 0.246 | 3.68 | 0.18 | 0.603 | 0.029 |

**Table 2**

| (Disc No.: 979926-05-1) | | | | | | | |
|---|---|---|---|---|---|---|---|
| Run | Orientation | Down Force (lbf) | Velocity (m/min) | Frictional force(1bf) | | COF | |
| | | | | Average | SD | Average | SD |
| 17 | 1 | 6.1 | 0.493 | 4.02 | 0.13 | 0.660 | 0.021 |
| 18 | 1 | 6.1 | 0.493 | 3.95 | 0.17 | 0.648 | 0.029 |
| 19 | 2 | 6.1 | 0.493 | 4.28 | 0.21 | 0.702 | 0.034 |
| 20 | 2 | 6.1 | 0.493 | 4.04 | 0.22 | 0.662 | 0.036 |
| 21 | 3 | 6.1 | 0.493 | 4.03 | 0.15 | 0.660 | 0.025 |
| 22 | 3 | 6.1 | 0.493 | 3.98 | 0.16 | 0.653 | 0.027 |
| 23 | 4 | 6.1 | 0.493 | 4.12 | 0.25 | 0.675 | 0.040 |
| 24 | 4 | 6.1 | 0.493 | 4.09 | 0.25 | 0.670 | 0.041 |
| 25 | 5 | 6.1 | 0.493 | 3.94 | 0.19 | 0.646 | 0.032 |
| 26 | 5 | 6.1 | 0.493 | 4.11 | 0.23 | 0.674 | 0.037 |
| 27 | 6 | 6.1 | 0.493 | 3.95 | 0.21 | 0.648 | 0.035 |
| 28 | 6 | 6.1 | 0.493 | 3.99 | 0.18 | 0.654 | 0.029 |
| 29 | 7 | 6.1 | 0.493 | 4.08 | 0.12 | 0.669 | 0.020 |
| 30 | 7 | 6.1 | 0.493 | 4.06 | 0.17 | 0.665 | 0.028 |
| 31 | 8 | 6.1 | 0.493 | 4.06 | 0.24 | 0.666 | 0.040 |
| 32 | 8 | 6.1 | 0.493 | 3.90 | 0.15 | 0.640 | 0.024 |

**Table 3**

| (Disc No.: 979926-05-1) | | | | | | | |
|---|---|---|---|---|---|---|---|
| Run | Orientation | Down Force (lbf) | Velocity (m/min) | Frictional force(lbf) | | COF | |
| | | | | Average | SD | Average | SD |
| 33 | 1 | 12 | 0.246 | 8.18 | 0.35 | 0.682 | 0.029 |
| 34 | 1 | 12 | 0.246 | 8.04 | 0.30 | 0.670 | 0.025 |
| 35 | 2 | 12 | 0.246 | 8.20 | 0.43 | 0.683 | 0.036 |
| 36 | 2 | 12 | 0.246 | 8.35 | 0.36 | 0.696 | 0.030 |
| 37 | 3 | 12 | 0.246 | 8.39 | 0.47 | 0.699 | 0.039 |
| 38 | 3 | 12 | 0.246 | 8.29 | 0.36 | 0.691 | 0.030 |
| 39 | 4 | 12 | 0.246 | 8.16 | 0.44 | 0.680 | 0.036 |
| 40 | 4 | 12 | 0.246 | 8.37 | 0.29 | 0.697 | 0.024 |
| 41 | 5 | 12 | 0.246 | 8.39 | 0.40 | 0.699 | 0.033 |
| 42 | 5 | 12 | 0.246 | 8.31 | 0.45 | 0.693 | 0.038 |
| 43 | 6 | 12 | 0.246 | 8.55 | 0.40 | 0.712 | 0.033 |
| 44 | 6 | 12 | 0.246 | 8.00 | 0.38 | 0.667 | 0.032 |
| 45 | 7 | 12 | 0.246 | 8.09 | 0.28 | 0.674 | 0.023 |
| 46 | 7 | 12 | 0.246 | 8.70 | 0.42 | 0.725 | 0.035 |
| 47 | 8 | 12 | 0.246 | 8.37 | 0.27 | 0.698 | 0.022 |
| 48 | 8 | 12 | 0.246 | 8.34 | 0.29 | 0.695 | 0.024 |

**Table 4**

| (Disc No.: 979926-05-1) | | | | | | | |
|---|---|---|---|---|---|---|---|
| Run | Orientation | Down Force (lbf) | Velocity (m/min) | Frictional force(lbf) | | COF | |
| | | | | Average | SD | Average | SD |
| 49 | 1 | 12 | 0.493 | 8.74 | 0.52 | 0.728 | 0.044 |
| 50 | 1 | 12 | 0.493 | 8.59 | 0.27 | 0.716 | 0.023 |
| 51 | 2 | 12 | 0.493 | 8.27 | 0.27 | 0.689 | 0.023 |
| 52 | 2 | 12 | 0.493 | 8.68 | 0.37 | 0.723 | 0.031 |
| 53 | 3 | 12 | 0.493 | 8.56 | 0.42 | 0.713 | 0.035 |
| 54 | 3 | 12 | 0.493 | 8.52 | 0.54 | 0.710 | 0.045 |
| 55 | 4 | 12 | 0.493 | 8.02 | 0.42 | 0.668 | 0.035 |
| 56 | 4 | 12 | 0.493 | 8.24 | 0.50 | 0.686 | 0.042 |
| 57 | 5 | 12 | 0.493 | 8.14 | 0.40 | 0.679 | 0.033 |
| 58 | 5 | 12 | 0.493 | 8.23 | 0.41 | 0.686 | 0.034 |
| 59 | 6 | 12 | 0.493 | 8.26 | 0.36 | 0.688 | 0.030 |
| 60 | 6 | 12 | 0.493 | 8.26 | 0.31 | 0.688 | 0.026 |
| 61 | 7 | 12 | 0.493 | 8.68 | 0.33 | 0.723 | 0.027 |
| 62 | 7 | 12 | 0.493 | 8.32 | 0.34 | 0.694 | 0.028 |
| 63 | 8 | 12 | 0.493 | 8.47 | 0.29 | 0.706 | 0.024 |
| 64 | 8 | 12 | 0.493 | 8.34 | 0.35 | 0.695 | 0.029 |

**Table 5**

| (Disc No.: 979926-05-2) | | | | | | | |
|---|---|---|---|---|---|---|---|
| Run | Orientation | Down Force (lbf) | Velocity (m/min) | Frictional force(lbf) | | COF | |
| | | | | Average | SD | Average | SD |
| 1 | 1 | 6.1 | 0.246 | 4.51 | 0.11 | 0.739 | 0.018 |
| 2 | 1 | 6.1 | 0.246 | 4.56 | 0.08 | 0.748 | 0.012 |
| 3 | 2 | 6.1 | 0.246 | 4.40 | 0.08 | 0.721 | 0.013 |
| 4 | 2 | 6.1 | 0.246 | 4.47 | 0.08 | 0.734 | 0.013 |
| 5 | 3 | 6.1 | 0.246 | 4.44 | 0.08 | 0.727 | 0.014 |
| 6 | 3 | 6.1 | 0.246 | 4.32 | 0.09 | 0.709 | 0.014 |
| 7 | 4 | 6.1 | 0.246 | 4.53 | 0.08 | 0.742 | 0.014 |
| 8 | 4 | 6.1 | 0.246 | 4.32 | 0.07 | 0.709 | 0.012 |
| 9 | 5 | 6.1 | 0.246 | 4.48 | 0.12 | 0.734 | 0.019 |
| 10 | 5 | 6.1 | 0.246 | 4.18 | 0.10 | 0.686 | 0.016 |
| 11 | 6 | 6.1 | 0.246 | 4.53 | 0.12 | 0.743 | 0.019 |
| 12 | 6 | 6.1 | 0.246 | 4.38 | 0.13 | 0.718 | 0.021 |
| 13 | 7 | 6.1 | 0.246 | 4.50 | 0.13 | 0.737 | 0.021 |
| 14 | 7 | 6.1 | 0.246 | 4.33 | 0.18 | 0.710 | 0.030 |
| 15 | 8 | 6.1 | 0.246 | 4.79 | 0.21 | 0.785 | 0.034 |
| 16 | 8 | 6.1 | 0.246 | 4.82 | 0.20 | 0.790 | 0.033 |

**Table 6**

| (Disc No.: 979926-05-2) | | | | | | | |
|---|---|---|---|---|---|---|---|
| Run | Orientation | Down Force (lbf) | Velocity (m/min) | Frictional force(lbf) | | COF | |
| | | | | Average | SD | Average | SD |
| 17 | 1 | 6.1 | 0.493 | 4.62 | 0.19 | 0.757 | 0.031 |
| 18 | 1 | 6.1 | 0.493 | 4.54 | 0.22 | 0.745 | 0.036 |
| 19 | 2 | 6.1 | 0.493 | 4.58 | 0.25 | 0.750 | 0.041 |
| 20 | 2 | 6.1 | 0.493 | 4.50 | 0.20 | 0.737 | 0.032 |
| 21 | 3 | 6.1 | 0.493 | 4.59 | 0.18 | 0.753 | 0.030 |
| 22 | 3 | 6.1 | 0.493 | 4.54 | 0.22 | 0.745 | 0.037 |
| 23 | 4 | 6.1 | 0.493 | 4.48 | 0.23 | 0.734 | 0.038 |
| 24 | 4 | 6.1 | 0.493 | 4.22 | 0.15 | 0.691 | 0.025 |
| 25 | 5 | 6.1 | 0.493 | 4.44 | 0.25 | 0.727 | 0.040 |
| 26 | 5 | 6.1 | 0.493 | 4.31 | 0.22 | 0.707 | 0.037 |
| 27 | 6 | 6.1 | 0.493 | 4.44 | 0.33 | 0.729 | 0.055 |
| 28 | 6 | 6.1 | 0.493 | 4.38 | 0.35 | 0.718 | 0.057 |
| 29 | 7 | 6.1 | 0.493 | 4.56 | 0.23 | 0.747 | 0.038 |
| 30 | 7 | 6.1 | 0.493 | 4.39 | 0.26 | 0.720 | 0.043 |
| 31 | 8 | 6.1 | 0.493 | 4.68 | 0.21 | 0.767 | 0.034 |
| 32 | 8 | 6.1 | 0.493 | 4.79 | 0.24 | 0.785 | 0.039 |

**Table 7**

| (Disc No.: 979926-05-2) | | | | | | | |
|---|---|---|---|---|---|---|---|
| Run | Orientation | Down Force (lbf) | Velocity (m/min) | Frictional force(lbf) | | COF | |
| | | | | Average | SD | Average | SD |
| 33 | 1 | 12 | 0.246 | 8.94 | 0.15 | 0.745 | 0.013 |
| 34 | 1 | 12 | 0.246 | 8.49 | 0.25 | 0.708 | 0.021 |
| 35 | 2 | 12 | 0.246 | 8.81 | 0.38 | 0.734 | 0.032 |
| 36 | 2 | 12 | 0.246 | 8.64 | 0.26 | 0.720 | 0.022 |
| 37 | 3 | 12 | 0.246 | 9.04 | 0.38 | 0.754 | 0.032 |
| 38 | 3 | 12 | 0.246 | 8.80 | 0.27 | 0.734 | 0.023 |
| 39 | 4 | 12 | 0.246 | 8.86 | 0.29 | 0.739 | 0.024 |
| 40 | 4 | 12 | 0.246 | 8.44 | 0.36 | 0.703 | 0.030 |
| 41 | 5 | 12 | 0.246 | 8.86 | 0.30 | 0.738 | 0.025 |
| 42 | 5 | 12 | 0.246 | 8.75 | 0.36 | 0.730 | 0.030 |
| 43 | 6 | 12 | 0.246 | 8.91 | 0.32 | 0.743 | 0.027 |
| 44 | 6 | 12 | 0.246 | 8.69 | 0.28 | 0.724 | 0.023 |
| 45 | 7 | 12 | 0.246 | 8.71 | 0.35 | 0.726 | 0.029 |
| 46 | 7 | 12 | 0.246 | 8.57 | 0.24 | 0.714 | 0.020 |
| 47 | 8 | 12 | 0.246 | 9.11 | 0.25 | 0.759 | 0.021 |
| 48 | 8 | 12 | 0.246 | 8.84 | 0.28 | 0.737 | 0.023 |

**Table 8**

| (Disc No.: 979926-05-2) | | | | | | | |
|---|---|---|---|---|---|---|---|
| Run | Orientation | Down Force (lbf) | Velocity (m/min) | Frictional force(lbf) | | COF | |
| | | | | Average | SD | Average | SD |
| 49 | 1 | 12 | 0.493 | 9.22 | 0.30 | 0.769 | 0.025 |
| 50 | 1 | 12 | 0.493 | 8.68 | 0.35 | 0.724 | 0.029 |
| 51 | 2 | 12 | 0.493 | 8.74 | 0.27 | 0.729 | 0.022 |
| 52 | 2 | 12 | 0.493 | 8.76 | 0.34 | 0.730 | 0.028 |
| 53 | 3 | 12 | 0.493 | 8.76 | 0.22 | 0.730 | 0.018 |
| 54 | 3 | 12 | 0.493 | 8.93 | 0.24 | 0.744 | 0.020 |
| 55 | 4 | 12 | 0.493 | 8.58 | 0.36 | 0.715 | 0.030 |
| 56 | 4 | 12 | 0.493 | 8.82 | 0.25 | 0.735 | 0.021 |
| 57 | 5 | 12 | 0.493 | 8.53 | 0.20 | 0.711 | 0.017 |
| 58 | 5 | 12 | 0.493 | 8.79 | 0.32 | 0.732 | 0.027 |
| 59 | 6 | 12 | 0.493 | 8.94 | 0.26 | 0.745 | 0.021 |
| 60 | 6 | 12 | 0.493 | 8.80 | 0.31 | 0.733 | 0.026 |
| 61 | 7 | 12 | 0.493 | 8.91 | 0.25 | 0.743 | 0.021 |
| 62 | 7 | 12 | 0.493 | 8.69 | 0.18 | 0.724 | 0.015 |
| 63 | 8 | 12 | 0.493 | 9.21 | 0.17 | 0.767 | 0.014 |
| 64 | 8 | 12 | 0.493 | 9.37 | 0.20 | 0.781 | 0.017 |

**Table 9**

| (Disc No.: 979926-05-3) | | | | | | | |
|---|---|---|---|---|---|---|---|
| Run | Orientation | Down Force (lbf) | Velocity (m/min) | Frictional force(lbf) | | COF | |
| | | | | Average | SD | Average | SD |
| 1 | 1 | 6.1 | 0.246 | 4.28 | 0.13 | 0.701 | 0.022 |
| 2 | 1 | 6.1 | 0.246 | 4.34 | 0.18 | 0.711 | 0.030 |
| 3 | 2 | 6.1 | 0.246 | 4.54 | 0.14 | 0.745 | 0.023 |
| 4 | 2 | 6.1 | 0.246 | 4.45 | 0.13 | 0.730 | 0.022 |
| 5 | 3 | 6.1 | 0.246 | 4.36 | 0.12 | 0.714 | 0.020 |
| 6 | 3 | 6.1 | 0.246 | 4.35 | 0.12 | 0.714 | 0.020 |
| 7 | 4 | 6.1 | 0.246 | 4.30 | 0.22 | 0.705 | 0.035 |
| 8 | 4 | 6.1 | 0.246 | 4.32 | 0.21 | 0.709 | 0.034 |
| 9 | 5 | 6.1 | 0.246 | 4.22 | 0.12 | 0.692 | 0.020 |
| 10 | 5 | 6.1 | 0.246 | 4.17 | 0.12 | 0.684 | 0.020 |
| 11 | 6 | 6.1 | 0.246 | 4.48 | 0.13 | 0.734 | 0.022 |
| 12 | 6 | 6.1 | 0.246 | 4.32 | 0.12 | 0.709 | 0.019 |
| 13 | 7 | 6.1 | 0.246 | 4.50 | 0.12 | 0.738 | 0.020 |
| 14 | 7 | 6.1 | 0.246 | 4.44 | 0.14 | 0.728 | 0.023 |
| 15 | 8 | 6.1 | 0.246 | 4.53 | 0.12 | 0.743 | 0.019 |
| 16 | 8 | 6.1 | 0.246 | 4.46 | 0.11 | 0.731 | 0.018 |

**Table 10**

| (Disc No.: 979926-05-3) | | | | | | | |
|---|---|---|---|---|---|---|---|
| Run | Orientation | Down Force (lbf) | Velocity (m/min) | Frictional force(lbf) | | COF | |
| | | | | Average | SD | Average | SD |
| 17 | 1 | 6.1 | 0.493 | 4.43 | 0.26 | 0.727 | 0.043 |
| 18 | 1 | 6.1 | 0.493 | 4.48 | 0.27 | 0.734 | 0.045 |
| 19 | 2 | 6.1 | 0.493 | 4.64 | 0.19 | 0.761 | 0.031 |
| 20 | 2 | 6.1 | 0.493 | 4.56 | 0.22 | 0.748 | 0.035 |
| 21 | 3 | 6.1 | 0.493 | 4.58 | 0.19 | 0.751 | 0.032 |
| 22 | 3 | 6.1 | 0.493 | 4.61 | 0.19 | 0.756 | 0.031 |
| 23 | 4 | 6.1 | 0.493 | 4.36 | 0.20 | 0.715 | 0.033 |
| 24 | 4 | 6.1 | 0.493 | 4.43 | 0.20 | 0.727 | 0.033 |
| 25 | 5 | 6.1 | 0.493 | 4.40 | 0.22 | 0.721 | 0.036 |
| 26 | 5 | 6.1 | 0.493 | 4.32 | 0.22 | 0.709 | 0.037 |
| 27 | 6 | 6.1 | 0.493 | 4.40 | 0.25 | 0.721 | 0.041 |
| 28 | 6 | 6.1 | 0.493 | 4.46 | 0.29 | 0.731 | 0.047 |
| 29 | 7 | 6.1 | 0.493 | 4.57 | 0.19 | 0.749 | 0.031 |
| 30 | 7 | 6.1 | 0.493 | 4.54 | 0.23 | 0.744 | 0.038 |
| 31 | 8 | 6.1 | 0.493 | 4.42 | 0.18 | 0.725 | 0.030 |
| 32 | 8 | 6.1 | 0.493 | 4.48 | 0.20 | 0.735 | 0.033 |

**Table 11**

| (Disc No.: 979926-05-3) | | | | | | | |
|---|---|---|---|---|---|---|---|
| Run | Orientation | Down Force (lbf) | Velocity (m/min) | Frictional force(lbf) | | COF | |
| | | | | Average | SD | Average | SD |
| 33 | 1 | 12 | 0.246 | 8.46 | 0.20 | 0.705 | 0.017 |
| 34 | 1 | 12 | 0.246 | 8.49 | 0.30 | 0.707 | 0.025 |
| 35 | 2 | 12 | 0.246 | 8.58 | 0.17 | 0.715 | 0.014 |
| 36 | 2 | 12 | 0.246 | 8.67 | 0.18 | 0.722 | 0.015 |
| 37 | 3 | 12 | 0.246 | 8.52 | 0.17 | 0.710 | 0.014 |
| 38 | 3 | 12 | 0.246 | 8.52 | 0.18 | 0.710 | 0.015 |
| 39 | 4 | 12 | 0.246 | 8.40 | 0.17 | 0.700 | 0.014 |
| 40 | 4 | 12 | 0.246 | 8.36 | 0.15 | 0.697 | 0.012 |
| 41 | 5 | 12 | 0.246 | 8.23 | 0.14 | 0.686 | 0.011 |
| 42 | 5 | 12 | 0.246 | 8.18 | 0.17 | 0.682 | 0.014 |
| 43 | 6 | 12 | 0.246 | 8.50 | 0.15 | 0.709 | 0.012 |
| 44 | 6 | 12 | 0.246 | 8.32 | 0.20 | 0.694 | 0.016 |
| 45 | 7 | 12 | 0.246 | 8.60 | 0.17 | 0.717 | 0.014 |
| 46 | 7 | 12 | 0.246 | 8.53 | 0.14 | 0.711 | 0.011 |
| 47 | 8 | 12 | 0.246 | 8.22 | 0.20 | 0.685 | 0.016 |
| 48 | 8 | 12 | 0.246 | 8.28 | 0.15 | 0.690 | 0.013 |

**Table 12**

| (Disc No.: 979926-05-3) | | | | | | | |
|---|---|---|---|---|---|---|---|
| Run | Orientation | Down Force (lbf) | Velocity (m/min) | Frictional force(lbf) | | COF | |
| | | | | Average | SD | Average | SD |
| 49 | 1 | 12 | 0.493 | 8.58 | 0.27 | 0.715 | 0.023 |
| 50 | 1 | 12 | 0.493 | 8.78 | 0.31 | 0.731 | 0.026 |
| 51 | 2 | 12 | 0.493 | 8.83 | 0.25 | 0.736 | 0.021 |
| 52 | 2 | 12 | 0.493 | 8.73 | 0.24 | 0.727 | 0.020 |
| 53 | 3 | 12 | 0.493 | 8.59 | 0.19 | 0.716 | 0.016 |
| 54 | 3 | 12 | 0.493 | 8.64 | 0.26 | 0.720 | 0.022 |
| 55 | 4 | 12 | 0.493 | 8.53 | 0.23 | 0.711 | 0.019 |
| 56 | 4 | 12 | 0.493 | 8.42 | 0.19 | 0.701 | 0.016 |
| 57 | 5 | 12 | 0.493 | 8.42 | 0.28 | 0.702 | 0.023 |
| 58 | 5 | 12 | 0.493 | 8.29 | 0.22 | 0.691 | 0.019 |
| 59 | 6 | 12 | 0.493 | 8.53 | 0.22 | 0.711 | 0.018 |
| 60 | 6 | 12 | 0.493 | 8.47 | 0.25 | 0.706 | 0.021 |
| 61 | 7 | 12 | 0.493 | 8.77 | 0.25 | 0.731 | 0.021 |
| 62 | 7 | 12 | 0.493 | 8.75 | 0.28 | 0.729 | 0.023 |
| 63 | 8 | 12 | 0.493 | 8.76 | 0.25 | 0.730 | 0.021 |
| 64 | 8 | 12 | 0.493 | 8.63 | 0.14 | 0.719 | 0.012 |

**Table 13**

| (Disc No.: 979926-05-4) | | | | | | | |
|---|---|---|---|---|---|---|---|
| Run | Orientation | Down Force (lbf) | Velocity (m/min) | Frictional force(lbf) | | COF | |
| | | | | Average | SD | Average | SD |
| 1 | 1 | 6.1 | 0.246 | 4.20 | 0.09 | 0.689 | 0.016 |
| 2 | 1 | 6.1 | 0.246 | 4.11 | 0.10 | 0.674 | 0.016 |
| 3 | 2 | 6.1 | 0.246 | 4.10 | 0.13 | 0.672 | 0.021 |
| 4 | 2 | 6.1 | 0.246 | 4.03 | 0.13 | 0.661 | 0.022 |
| 5 | 3 | 6.1 | 0.246 | 4.05 | 0.14 | 0.664 | 0.023 |
| 6 | 3 | 6.1 | 0.246 | 3.81 | 0.12 | 0.625 | 0.020 |
| 7 | 4 | 6.1 | 0.246 | 3.74 | 0.18 | 0.613 | 0.030 |
| 8 | 4 | 6.1 | 0.246 | 3.67 | 0.19 | 0.602 | 0.031 |
| 9 | 5 | 6.1 | 0.246 | 3.86 | 0.16 | 0.632 | 0.027 |
| 10 | 5 | 6.1 | 0.246 | 3.91 | 0.18 | 0.642 | 0.030 |
| 11 | 6 | 6.1 | 0.246 | 3.84 | 0.17 | 0.629 | 0.029 |
| 12 | 6 | 6.1 | 0.246 | 3.84 | 0.18 | 0.630 | 0.029 |
| 13 | 7 | 6.1 | 0.246 | 3.92 | 0.18 | 0.643 | 0.029 |
| 14 | 7 | 6.1 | 0.246 | 3.97 | 0.24 | 0.650 | 0.039 |
| 15 | 8 | 6.1 | 0.246 | 3.98 | 0.25 | 0.653 | 0.042 |
| 16 | 8 | 6.1 | 0.246 | 3.99 | 0.23 | 0.654 | 0.038 |

**Table 14**

| (Disc No.: 979926-05-4) | | | | | | | |
|---|---|---|---|---|---|---|---|
| Run | Orientation | Down Force (lbf) | Velocity (m/min) | Frictional force(lbf) | | COF | |
| | | | | Average | SD | Average | SD |
| 17 | 1 | 6.1 | 0.493 | 3.99 | 0.30 | 0.654 | 0.049 |
| 18 | 1 | 6.1 | 0.493 | 4.04 | 0.23 | 0.663 | 0.037 |
| 19 | 2 | 6.1 | 0.493 | 4.06 | 0.24 | 0.665 | 0.040 |
| 20 | 2 | 6.1 | 0.493 | 4.04 | 0.22 | 0.662 | 0.036 |
| 21 | 3 | 6.1 | 0.493 | 3.79 | 0.19 | 0.622 | 0.031 |
| 22 | 3 | 6.1 | 0.493 | 3.80 | 0.19 | 0.622 | 0.031 |
| 23 | 4 | 6.1 | 0.493 | 3.74 | 0.24 | 0.613 | 0.040 |
| 24 | 4 | 6.1 | 0.493 | 3.72 | 0.25 | 0.610 | 0.041 |
| 25 | 5 | 6.1 | 0.493 | 3.93 | 0.24 | 0.644 | 0.039 |
| 26 | 5 | 6.1 | 0.493 | 3.93 | 0.24 | 0.645 | 0.040 |
| 27 | 6 | 6.1 | 0.493 | 3.95 | 0.24 | 0.648 | 0.038 |
| 28 | 6 | 6.1 | 0.493 | 3.86 | 0.23 | 0.633 | 0.038 |
| 29 | 7 | 6.1 | 0.493 | 3.93 | 0.23 | 0.644 | 0.038 |
| 30 | 7 | 6.1 | 0.493 | 3.99 | 0.25 | 0.654 | 0.041 |
| 31 | 8 | 6.1 | 0.493 | 3.91 | 0.23 | 0.641 | 0.038 |
| 32 | 8 | 6.1 | 0.493 | 4.08 | 0.25 | 0.670 | 0.042 |

**Table 15**

| (Disc No.: 979926-05-4) | | | | | | | |
|---|---|---|---|---|---|---|---|
| Run | Orientation | Down Force (lbf) | Velocity (m/min) | Frictional force(lbf) | | COF | |
| | | | | Average | SD | Average | SD |
| 33 | 1 | 12 | 0.246 | 8.17 | 0.18 | 0.681 | 0.015 |
| 34 | 1 | 12 | 0.246 | 8.16 | 0.18 | 0.680 | 0.015 |
| 35 | 2 | 12 | 0.246 | 8.22 | 0.22 | 0.685 | 0.018 |
| 36 | 2 | 12 | 0.246 | 8.22 | 0.23 | 0.685 | 0.019 |
| 37 | 3 | 12 | 0.246 | 7.75 | 0.18 | 0.646 | 0.015 |
| 38 | 3 | 12 | 0.246 | 7.83 | 0.17 | 0.653 | 0.014 |
| 39 | 4 | 12 | 0.246 | 7.53 | 0.24 | 0.627 | 0.020 |
| 40 | 4 | 12 | 0.246 | 7.71 | 0.26 | 0.643 | 0.021 |
| 41 | 5 | 12 | 0.246 | 7.79 | 0.16 | 0.649 | 0.013 |
| 42 | 5 | 12 | 0.246 | 7.78 | 0.21 | 0.648 | 0.017 |
| 43 | 6 | 12 | 0.246 | 7.99 | 0.20 | 0.666 | 0.017 |
| 44 | 6 | 12 | 0.246 | 7.96 | 0.34 | 0.664 | 0.029 |
| 45 | 7 | 12 | 0.246 | 8.03 | 0.21 | 0.669 | 0.017 |
| 46 | 7 | 12 | 0.246 | 7.94 | 0.16 | 0.662 | 0.013 |
| 47 | 8 | 12 | 0.246 | 8.05 | 0.28 | 0.671 | 0.023 |
| 48 | 8 | 12 | 0.246 | 8.21 | 0.20 | 0.684 | 0.016 |

**Table 16**

| (Disc No.: 979926-05-4) | | | | | | | |
|---|---|---|---|---|---|---|---|
| Run | Orientation | Down Force (lbf) | Velocity (m/min) | Frictional force(lbf) | | COF | |
| | | | | Average | SD | Average | SD |
| 49 | 1 | 12 | 0.493 | 8.13 | 0.22 | 0.678 | 0.018 |
| 50 | 1 | 12 | 0.493 | 8.10 | 0.24 | 0.675 | 0.020 |
| 51 | 2 | 12 | 0.493 | 8.06 | 0.27 | 0.672 | 0.023 |
| 52 | 2 | 12 | 0.493 | 7.92 | 0.22 | 0.660 | 0.018 |
| 53 | 3 | 12 | 0.493 | 7.84 | 0.24 | 0.654 | 0.020 |
| 54 | 3 | 12 | 0.493 | 7.78 | 0.21 | 0.648 | 0.018 |
| 55 | 4 | 12 | 0.493 | 7.85 | 0.22 | 0.654 | 0.018 |
| 56 | 4 | 12 | 0.493 | 7.73 | 0.21 | 0.644 | 0.018 |
| 57 | 5 | 12 | 0.493 | 7.77 | 0.30 | 0.648 | 0.025 |
| 58 | 5 | 12 | 0.493 | 7.83 | 0.31 | 0.652 | 0.026 |
| 59 | 6 | 12 | 0.493 | 7.95 | 0.22 | 0.663 | 0.019 |
| 60 | 6 | 12 | 0.493 | 7.78 | 0.21 | 0.649 | 0.017 |
| 61 | 7 | 12 | 0.493 | 8.05 | 0.22 | 0.671 | 0.018 |
| 62 | 7 | 12 | 0.493 | 7.97 | 0.21 | 0.664 | 0.018 |
| 63 | 8 | 12 | 0.493 | 8.07 | 0.24 | 0.673 | 0.020 |
| 64 | 8 | 12 | 0.493 | 8.16 | 0.25 | 0.680 | 0.021 |

### EFFECT OF THE INVENTION

Under most conditions, the coefficient of friction did not change significantly with changes in the load or the down force or with changes in the dragging velocity. The frictional force increased with the load or down force as expected. However, the frictional force did not change significantly at different dragging velocities. Under 2.76 kg (6.1 lbf) and 0.246 m/min, the coefficient of friction for Disc 979926-05-4 and Disc 979926-05-1 are about the same and these two are less than the coefficient of friction for Disc 979926-05-3 and Disc 979926-05-2 which are also about the same. Under 2.76 kg (6.1 lbf) and 0.493 m/min, the coefficient of friction for Disc 979926-05-4 is less than that of Disc 979926-05-1 which in turn is less than that of Disc 979926-05-3. The coefficient of friction for Disc 979926-05-2 is about equal to that of Disc 979926-05-3. Under 5.44 kg (12 lbf) and 0.246 m/min, the coefficient of friction for Disc 979926-05-4 is less than that of Discs 979926-05-1 and 979926-05-3 which in turn are less than that of Disc 979926-05-2. And finally, under 5.44 kg (12 lbf) and 0.493 m/min, the coefficient of friction of Disc 979926-05-4 is less than that of Disc 979926-05-1 which is less than that of Disc 979926-05-3 which is less than that of Disc 979926-05-2.

This is interesting in that there is some change with discs and not all discs respond to increased load in the same way. It is also interesting to note based on average standard deviation figures that there is some degree of variation between discs as to the effects of orientation. However, runs with the same disc, load and orientation show a surprisingly good correlation suggesting that the results are indeed representative of an essential coefficient of friction characteristic and ultimately wearing or roughening capability of conditioner discs.

## Claims

1. A device for determining the coefficient of friction of conditioner discs, comprising:
a base member (36),
a disc friction member (39) provided on the base member (36), the base member (36) and the disc friction member (39) having lengths sufficient to allow transverse motion of the conditioner disc (52) for measurement of the coefficient of friction,
a moving means (48) for moving the conditioner disc (52) along a disc friction surface of the disc friction member (39),
a securing means (50) for securing the conditioner disc (52) to the moving means (48) for moving the conditioner disc (52) along the disc friction member (39),
a driving means (41) for driving the moving means (48) which moves the conditioner disc (52) along disc friction surface of the disc friction member (39), and
a measuring means (28) for measuring the frictional force applied to the disc friction member (39) by the movement of the conditioner disc (52).

2. A device for determining the coefficient of friction of conditioner discs according to claim 1, wherein
the moving means comprises a block (48) provided in a movable manner along the longitudinal direction of the base member (36) and the disc friction member (39),
the securing means comprises a holder (50) fixed to the block (48),
the holder (50) has a concave portion toward the disc movement direction, which has a concave shape when seen from above so as to hold at least a part of the periphery of the conditioner disc (52) placed an abrasive layer down on the disc friction member (39), and
the device further comprises at least one weight (54) for applying a loading to the conditioner disc (52) toward the disc friction member (39).

3. A device for determining the coefficient of friction of conditioner discs according to claim 2, wherein the driving means comprises a mechanical means (41) for moving the block (48) along the longitudinal direction of the base member (36) and the disc friction member (39), and a motor for driving the mechanical means (41).

4. A device for determining the coefficient of friction of conditioner discs according to claim 1, wherein
the base member is a rigid block (36) having a smooth upper surface,
the disc friction member is a sheet (39) fixed on the upper surface of the rigid block (36) in an exchangeable manner,
the sheet (39) is made of at least one material selected from the group consisting of polycarbonate, polyurethane, polyethylene terephthalate, and acrylate resin,
the measuring means is a load cell (28) for measuring the frictional force applied to the sheet (39) by the movement of the conditioner disc (52).

5. A method for determining the coefficient of friction of conditioner discs using the device according to claim 1, comprising the steps of:
moving the conditioner disc (52) placed an abrasive layer down on the disc friction member (39) along the disc friction member (39), and
measuring the frictional force applied to the disc friction member (39) by the movement of the conditioner disc (52) by the measuring means (28).

6. A method for determining the coefficient of friction of conditioner discs according to claim 5, further comprising the steps of:
placing a weight (54) on the conditioner disc (52) in an exchangeable manner for applying a constant loading to the conditioner disc (52) toward the disc friction member (39),
moving the conditioner disc (52) together with the weight (54) along the disc friction member (39), and
measuring the frictional force applied to the disc friction member (39) by the movement of the conditioner disc (52).
